# EUROPÄISCHE PATENTSCHRIFT

(11) **EP 1 740 398 B1**
(45) Veröffentlichungstag und Bekanntmachung des Hinweises auf die Patenterteilung: **10.06.2009**
(21) Anmeldenummer: 05717035.9
(22) Anmeldetag: 15.03.2005
(51) Int. Cl.: B60C 15/06

(54) **FAHRZEUGLUFTREIFEN MIT MEHRTEILIGEM KERNPROFIL UND VERFAHREN ZU DESSEN HERSTELLUNG**
VEHICLE PNEUMATIC TYRES HAVING A MULTI-PART CORE PROFILE, AND METHOD FOR THE PRODUCTION THEREOF
PNEUMATIQUE DE VEHICULE A PROFIL DE NOYAU EN PLUSIEURS PARTIES ET PROCEDE DE FABRICATION ASSOCIE

(30) Priorität: 20.04.2004 DE 102004018998
(43) Veröffentlichungstag der Anmeldung: 10.01.2007
(73) Patentinhaber: Continental Aktiengesellschaft, 30165 Hannover (DE)
(72) Erfinder: BIEGER, Andreas, 30823 Garbsen (DE); ROHDE, Dieter, 31275 Lehrte (DE)
(74) Vertreter: Finger, Karsten
(86) Internationale Anmeldenummer: PCT/EP2005/051157
(87) Internationale Veröffentlichungsnummer: WO 2005/102741

(56) Entgegenhaltungen:
- EP-A- 0 458 633
- EP-A- 0 689 949
- EP-A- 0 698 513
- EP-A- 0 736 400
- EP-A- 0 992 369

## Beschreibung

Die Erfindung betrifft einen Fahrzeugluftreifen mit einem Reifenwulst mit einem Kern und einem Kernprofil.

Es ist bekannt, dass Reifen im Seitenwandbereich sehr biegsam sind, so dass sie sich unter einer Last in senkrechter Richtung sich erheblich verformen können. Die Reifenwülste im Seitenwandbereich müssen jedoch eine gewisse Biegesteifigkeit aufweisen, damit der Reifen gute Fahreigenschaften besitzt. Die Biegesteifigkeit des Reifenwulstes muss umso größer sein, je größer die Belastung des Reifens im Fahrbetrieb ist, was insbesondere für Nutzfahrzeugreifen gilt. Um eine ausreichende Biegesteifigekeit des Reifenwulstes gewährleisten zu können, werden Fahrzeugluftreifen mit Kernprofilen versehen, die einen relativ großen Außendurchmesser besitzen. Dieses Erfordernis trifft insbesondere auf sogenannte Schrägschulterreifen für Nutzfahrzeuge zu. Bisher wurden Schrägschulterreifen nur auf sogenannten zweistufigen Reifenaufbaumaschinen gefertigt. Aufgrund ihres Konzeptes haben sie den Nachteil, dass der Fertigungsprozess keine hohe Fertigungsgenauigkeit gewährleisten kann. Aus diesem Grund sind moderne Baumaschinen als einstufige Reifenaufbaumaschinen ausgeführt. Eine Besonderheit des einstufigen Verfahrens ist, dass das Kernprofil aufrecht stehend sowie im vordublierten Zustand an die Baumaschine geliefert wird. Diese Vorgehensweise bietet den Vorteil, dass das Kernprofil nicht mehr um den Kern gedreht werden muss. Beim einstufigen Reifenaufbauverfahren stellt sich jedoch das Problem, dass das aufzubringende Kernprofil einen bestimmten Außendurchmesser nicht überschreiten kann. Zum einen ist die Begrenzung durch die Dimensionierung der Kernsetzvorrichtung vorgegeben, die ebenfalls einen bestimmten Außendurchmesser nicht überschreiten darf. Zum anderen ist die Vorkonfektionierung des vordublierten Kernprofiles bis zu einem bestimmten Außendurchmesser begrenzt. Bei einer Überschreitung des Außendurchmessers würde aufgrund der hohen Vorspannung das Kernprofil sich in Richtung des Kernes zurückbiegen. Bei einer Reduzierung des Außendurchmessers des Kernprofiles würden wiederum die Fahreigenschaften und die Wulsthaltbarkeit verschlechtert.

Der Erfindung liegt daher die Aufgabe zu Grunde, einen Fahrzeugluftreifen zu schaffen, der eine hohe Wulsthaltbarkeit besitzt.

Gelöst wird die Aufgabe gemäß den kennzeichnenden Merkmalen des Anspruchs 1 dadurch, dass das außenliegende Kernprofil-Teil und das innenliegende Kernprofil-Teil eine weiche Gummimischung mit einer Shore-A-Härte zwischen 58 und 68 aufweist, wobei das mittige Kernprofil-Teil eine harte Gummimischung mit einer Shore-A-Härte zwischen 81 und 91 aufweist.

Ein Vorteil des erfindungsgemäßen Wulstverstärkers ist insbesondere darin zu sehen, dass der erfindungsgemäße Fahrzeugluftreifen eine sehr hohe Wulsthaltbarkeit besitzt. Beim herkömmlichen einstufigen Reifenaufbauverfahren ist der maximale Außendurchmesser des Kernprofiles begrenzt. Durch die Verteilung des Kernprofiles in drei Kernprofilteile ist es möglich, den Fahrzeugluftreifen mit einem Kernprofil zu versehen, der einen verhältnismäßig großen Außendurchmesser besitzt. Dadurch besitzt der Reifen optimale Fahreigenschaften und eine hohe Laufleistung, da der Reifenwulst eine hohe Wulsthaltbarkeit besitzt.

In einer vorteilhaften Weiterbildung der Erfindung ist vorgesehen, dass das zur Reifeninnenseite angeordnete innenliegende Kernprofil-Teil ein erstes Kernprofil-Teil bildet und das mittige sowie außenliegende Kernprofil-Teil ein zweites Kernprofil-Teil bilden. Durch diese Unterteilung wird eine einfache Herstellbarkeit des Kernprofiles mit einem großen Außendurchmesser gewährleistet.

In einer weiteren vorteilhaften Weiterbildung der Erfindung ist vorgesehen, dass das erste Kernprofil-Teil einen größeren Außendurchmesser besitzt als das zweite Kernprofil-Teil. Dadurch lässt sich das Kernprofil einfacher herstellen.

In einer weiteren vorteilhaften Weiterbildung der Erfindung ist vorgesehen, dass das zweite Kernprofil-Teil als Vormaterial in einem auf den Kern vordublierten Zustand bei der Reifenkonfektion in den Reifen eingebracht ist Dadurch lässt sich der Fahrzeugluftreifen einfach mit einem einstufigen Reifenaufbauverfahren herstellen.

Durch die unterschiedlichen Gummimischungen des Kernprofiles wird die Wulsthaltbarkeit sowie die Fahreigenschaften des Reifens verbessert.

In einer weiteren vorteilhaften Weiterbildung der Erfindung ist vorgesehen, dass das mittige Kernprofil-Teil ein keilförmiges Profil aufweist. Das keilförmige Profil bietet den Vorteil, dass dieses Kernprofilteil auf eine einfache Art und Weise mit dem außenliegenden und dem innenliegenden Kernprofilteil versehen werden kann.

In einer weiteren vorteilhaften Weiterbildung der Erfindung ist vorgesehen, dass das innenliegende Kernprofil-Teil flächig mit dem mittigen und außenliegenden Kernprofil-Teil verbunden ist. Dadurch wird zwischen dem ersten Kernprofilteil und dem zweiten Kernprofilteil eine Verbindung mit einer hohen Festigkeit erreicht.

In einer weiteren vorteilhaften Weiterbildung der Erfindung ist vorgesehen, dass der Fahrzeugluftreifen ein Schrägschulterreifen für Nutzfahrzeuge ist. Bei diesen Reifen ist ein Kernprofil mit einem großen Außendurchmesser besonders vorteilhaft.

Anhand eines Ausführungsbeispieles soll die Erfindung näher erläutert werden. Es zeigen:
- Fig. 1:: einen Reifenwulst mit dem erfindungsgemäßen Kernprofil und
- Fig. 2:: das erfindungsgemäße Verfahren zur Herstellung eines Fahrzeugluftreifens.

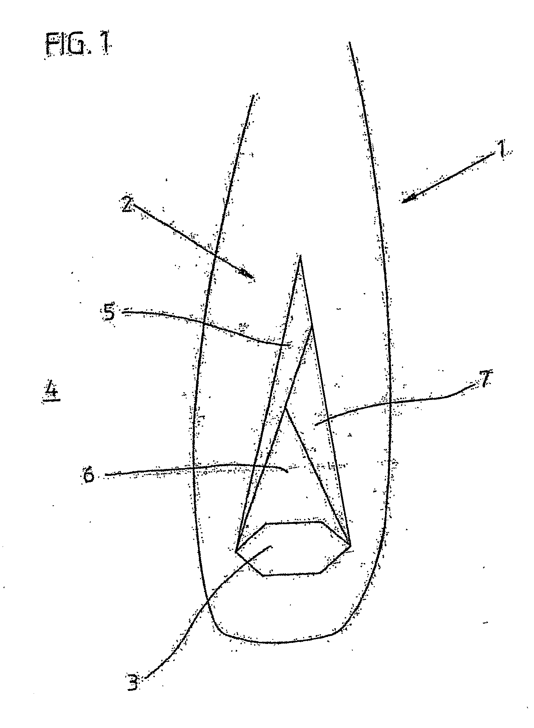

Die Figur 1 zeigt schematisch den Reifenwulst 1 des erfindungsgemäßen Fahrzeugluftreifens mit dem Kernprofil 2. Es handelt sich bei dieser Figur um eine Radialschnittansicht des Fahrzeugluftreifens, bei der das Kernprofil 2 und der Kern 3 als Querschnittsprofil dargestellt sind, wobei im Reifenwulst 1 weitere nicht explizit dargestellte Reifenbauteile verlaufen, wie beispielsweise Karkasslagen und Wulstverstärker. In der Figur ist der rechte Reifenwulst 1 dargestellt und die unter Druckluft stehende Reifeninnenseite 4 liegt auf der linken Seite des Reifenwulstes 1. Das Kernprofil 2 setzt sich aus drei Kernprofilteilen zusammen, dem innenliegenden zur Reifeninnenseite 4 angeordneten Kernprofilteil 5, dem mittigen Kernprofilteil 6 und dem außenliegenden Kernprofilteil 7. Das innenliegende Kernprofilteil 5 stellt dabei das beim Herstellungsverfahren genannte erste Kernprofilteil dar. Zusammengefügt ergeben diese Kernprofilteile ein keilförmiges Profil. Die Kernprofilteile 6 und 7 bilden das zweite Kernprofilteil, welches außerhalb der Reifenaufbautrommel als Vormaterial in einem auf dem Kern vordublierten Zustand bereitgestellt wird. Das Kernprofilteil 5 und das Kernprofilteil 7 bestehen aus einem Gummimaterial mit einer weichen Gummimischung, vorzugsweise mit einer Shore-A-Härte von etwa 63, wohingegen das mittige Kernprofilteil 6 aus einer harten Gummimischung mit einer Shore-A-Härte von etwa 86 besteht. Das Kernprofil 2 eignet sich insbesondere für Nutzfahrzeug-Schrägschulterreifen, die sich durch eine besonders hohe Seitenwand auszeichnen. Die Höhe des Kernprofilteiles 2 mit dem Kern 3, gemessen zwischen dem Außendurchmesser des Kernprofilteiles 2 und dem Innendurchmesser des Kernes 3, beträgt zwischen 110 und 150 mm, vorzugsweise etwa 130 mm. Durch das erfindungsgemäße Kernprofil 2 wird insgesamt eine bessere Wulsthaltbarkeit erzielt, wodurch der Fahrzeugluftreifen eine höhere Laufleistung besitzt als herkömmliche Reifen.

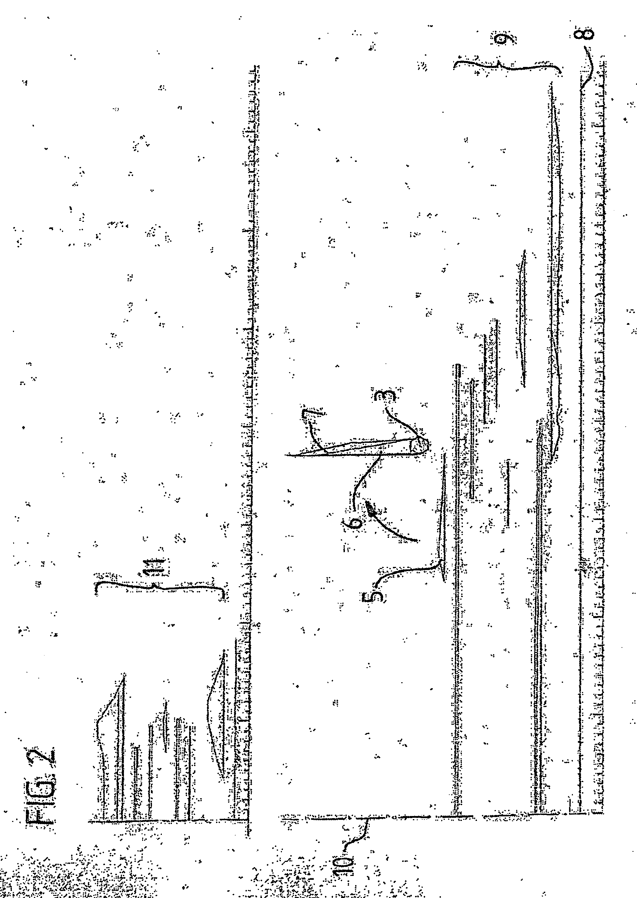

Die Figur 2 zeigt das erfindungsgemäße Verfahren. Es handelt sich um ein sogenanntes Einstufen-Verfahren, bei dem auf die Reifenaufbautrommel 8 zunächst nacheinander die Reifenbauteile 9 zur Bildung der Karkasse aufgelegt werden, wie beispielsweise die Wulstverstärkerlagen und die Innenseele. Das Bezugszeichen 8 zeigt lediglich schematisch die Oberfläche der Reifenaufbautrommel mit der Achsensymmetrielinie 10 an. Alle dargestellten Bauteile sind zudem rotationssymmetrisch zur axialen Achse der Reifenaufbautrommel. Als letztes Reifenbauteil wird das innenliegende Kernprofilteil 5 auf die letzte Lage aufgelegt. Anschließend wird mit einer nicht dargestellten Kernsetzvorrichtung der Kern 3 mit dem zweiten Kernprofilteil aus den Kernprofilteilen 6 und 7 über der Reifenaufbautrommel positioniert. Die Kernprofilteile 6 und 7 werden in einem vordublierten Zustand in einer auf den Kern 3 sitzenden aufrechten Position mit der Kernsetzvorrichtung an die entsprechende Stelle positioniert. Die Reifenbauteile 11 sind die Reifenbauteile des Gürtelbereiches des Fahrzeugluftreifens, die separat an der Gürtelmaschine aufgebaut werden. Beim Bombiervorgang werden die Reifenbauteile der Reifenkarkasse mit dem Gürtelbereich vereinigt, wobei gleichzeitig das erste Kernprofilteil 5 hochgeschlagen wird und damit mit dem zweiten Kernprofilteil zusammengeführt wird, wodurch das in Figur 1 dargestellte Kernprofil 2 entsteht. Anschließend wird der Fahrzeugluftreifen nach einem konventionellen Einstufen-Bauverfahren fertiggestellt.

### Bezugszeichenlistc

### (ist Teil der Beschreibung)

- 1: Reifenwulst
- 2: Kernprofil
- 3: Kern
- 4: Reifeninnenseite
- 5: Innenliegendes Kernprofilteil
- 6: Mittiges Kernprofilteil
- 7: Außenliegendes Kernprofilteil
- 8: Oberfläche der Reifenaufbautrommel
- 9: Reifenbauteile
- 10: Achsensymmetrielinie der Reifenaufbautrommel
- 11: Reifenbauteile im Gürtelbereich

## Patentansprüche

1. Fahrzeugluftreifen mit einem Reifenwulst (1) mit einem Kern (3) und einem Kernprofil (2), wobei das Kernprofil (2) den Kern (3) rotationssymetrisch zur axialen Achse des Fahrzeugluftreifens umschließt und in der Radialschnittansicht ein spitz zulaufendes Querschnittsprofil aufweist,
wobei das Kernprofil (2) aus mindestens drei Kernprofil-Teilen (4, 5, 6) besteht, die in der Zusammenfügung ein im Wesentlichen keilförmiges Querschnittsprofil ergeben,
**dadurch gekennzeichnet, dass**
das außenliegende Kernprofil-Teil (7) und das innenliegende Kernprofil-Teil (5) eine weiche Gummimischung mit einer Shore-A-Härte zwischen 58 und 68 aufweist,
wobei das mittige Kernprofil-Teil (6) eine harte Gummimischung mit einer Shore-A-Härte zwischen 81 und 91 aufweist.

2. Fahrzeugluftreifen nach Anspruch 1,
**dadurch gekennzeichnet, dass**
das zur Reifeninnenseite (4) angeordnete innenliegende Kernprofil-Teil (5) ein erstes Kernprofil-Teil bildet und das mittige (5) sowie außenliegende Kernprofil-Teil (7) ein zweites Kernprofil-Teil bilden.

3. Fahrzeugluftreifen nach Anspruch 1 oder 2,
**dadurch gekennzeichnet, dass**
das erste Kernprofil-Teil einen größeren Außendurchmesser besitzt als das zweite Kernprofil-Teil.

4. Fahrzeugluftreifen nach einem der Ansprüche 1 bis 3,
**dadurch gekennzeichnet, dass**
das mittige Kernprofil-Teil (6) ein keilförmiges Profil aufweist.

5. Fahrzeugluftreifen nach einem der Ansprüche 1 bis 4,
**dadurch gekennzeichnet, dass**
das innenliegende Kernprofil-Teil (5) flächig mit dem mittigen (6) und außenliegenden Kernprofil-Teil (7) verbunden ist.

6. Fahrzeugluftreifen nach einem der Ansprüche 1 bis 5,
**dadurch gekennzeichnet, dass**
der Fahrzeugluftreifen ein Schrägschulterreifen für Nutzfahrzeuge ist.

7. Fahrzeugluftreifen nach einem der Ansprüche 1 bis 6,
**dadurch gekennzeichnet, dass**
die Höhe des Kernprofiles (2) mit dem Kern (3), gemessen zwischen Außendurchmesser des Kernprofiles (2) und Innendurchmesser des Kernes (3), zwischen 110 und 150 mm beträgt.

## Claims

1. Pneumatic vehicle tire having a tire bead (1) with a bead core (3) and a bead filler (2), the bead filler (2) enclosing the bead core (3) rotationally symmetrically in relation to the axial axis of the pneumatic vehicle tire and, in the radial sectional view, having a cross-sectional profile tapering to a point, the bead filler (2) comprising at least three bead filler parts (4, 5, 6), which when joined together produce a substantially wedge-shaped cross-sectional profile,
**characterized in that** the outer bead filler part (7) and the inner bead filler part (5) comprise a soft rubber compound with a Shore A hardness of between 58 and 68,
the central bead filler part (6) comprising a hard rubber compound with a Shore A hardness of between 81 and 91.

2. Pneumatic vehicle tire according to Claim 1, **characterized in that** the inner bead filler part (5), arranged toward the inner side (4) of the tire, forms a first bead filler part and the central and outer bead filler parts (5 and 7) form a second bead filler part.

3. Pneumatic vehicle tire according to Claim 1 or 2, wherein the first bead filler part has a larger outer diameter than the second bead filler part.

4. Pneumatic vehicle tire according to one of Claims 1 to 3, **characterized in that** the central bead filler part (6) has a wedge-shaped profile.

5. Pneumatic vehicle tire according to one of Claims 1 to 4, **characterized in that** the inner bead filler part (5) is connected in surface-area contact to the central and outer bead filler parts (6 and 7).

6. Pneumatic vehicle tire according to one of Claims 1 to 5, **characterized in that** the pneumatic vehicle tire is a tapered bead seat tire for commercial vehicles.

7. Pneumatic vehicle tire according to one of Claims 1 to 6, **characterized in that** the height of the bead filler (2) with the bead core (3), measured between the outer diameter of the bead filler (2) and the inner diameter of the bead core (3), is between 110 and 150 mm.

## Revendications

1. Bandage pneumatique pour véhicule, qui présente un bourrelet (1) de bandage doté d'une âme (3) et d'un profilé d'âme (2), le profilé d'âme (2) entourant l'âme (3) à symétrie de rotation par rapport à l'axe axial du bandage pneumatique pour véhicule et présentant en coupe radiale une section transversale dont le profil se rétrécit en pointe, le profilé d'âme (2) étant constitué d'au moins trois parties (4, 5, 6) de profilé d'âme qui, lorsqu'elles sont assemblées, forment une section transversale dont le profil est essentiellement en forme de biseau,
**caractérisé en ce que**
la partie extérieure (7) du profilé d'âme et la partie intérieure (5) du profilé d'âme présentent un mélange de caoutchouc dont la dureté Shore A est comprise entre 58 et 68 et
**en ce que** la partie centrale (6) du profilé d'âme présente un mélange de caoutchouc dont la dureté Shore A est comprise entre 81 et 91.

2. Bandage pneumatique pour véhicule selon la revendication 1, **caractérisé en ce que** la partie intérieure (5) du profilé d'âme disposée du côté intérieur (4) du bandage forme une première partie du profilé d'âme, la partie centrale (5) et la partie extérieure (7) du profilé d'âme formant une deuxième partie du profilé d'âme.

3. Bandage pneumatique pour véhicule selon les revendications 1 ou 2, **caractérisé en ce que** la première partie du profilé d'âme a un diamètre extérieur plus grand que la deuxième partie du profilé d'âme.

4. Bandage pneumatique pour véhicule selon l'une des revendications 1 à 3, **caractérisé en ce que** la partie centrale (6) du profilé d'âme a un profil en forme de biseau.

5. Bandage pneumatique pour véhicule selon l'une des revendications 1 à 4, **caractérisé en ce que** la partie intérieure (5) du profilé d'âme est reliée sur toute sa surface à la partie centrale (6) et à la partie extérieure (7) du profilé d'âme.

6. Bandage pneumatique pour véhicule selon l'une des revendications 1 à 5, **caractérisé en ce que** le bandage pneumatique pour véhicule est un bandage à épaulement oblique pour véhicules utilitaires.

7. Bandage pneumatique pour véhicule selon l'une des revendications 1 à 6, **caractérisé en ce que** la hauteur du profilé d'âme (2) avec l'âme (3), mesurée entre le diamètre extérieur du profilé d'âme (2) et le diamètre intérieur de l'âme (3), est comprise entre 110 et 150 mm.
